(19) Europäisches Patentamt
European Patent Office
Office européen des brevets

(11) **EP 4 163 750 B1**

(12) **EUROPEAN PATENT SPECIFICATION**

(45) Date of publication and mention
of the grant of the patent:
**31.01.2024  Bulletin 2024/05**

(21) Application number: **21425046.6**

(22) Date of filing: **11.10.2021**

(51) International Patent Classification (IPC):
***G05B 23/02*** *(2006.01)*

(52) Cooperative Patent Classification (CPC):
**G05B 23/0281**

(54) **METHOD AND SYSTEM FOR DETECTING FLIGHT REGIMES OF AN AIRCRAFT, ON THE BASIS OF MEASUREMENTS ACQUIRED DURING AN AIRCRAFT FLIGHT**

VERFAHREN UND SYSTEM ZUR ERFASSUNG VON FLUGREGIMEN EINES FLUGZEUGS AUF DER BASIS VON MESSUNGEN WÄHREND EINES FLUGES EINES FLUGZEUGS

PROCÉDÉ ET SYSTÈME PERMETTANT DE DÉTECTER DES RÉGIMES DE VOL D'UN AÉRONEF, SUR LA BASE DE MESURES ACQUISES PENDANT UN VOL D'AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2023   Bulletin 2023/15**

(73) Proprietor: **Leonardo S.p.a.**
**00195 Roma (IT)**

(72) Inventors:
• **Baldi, Andrea**
**21017 SAMARATE (VA) (IT)**
• **Mariani, Ugo**
**21017 SAMARATE (VA) (IT)**
• **Mezzanzanica, Daniele**
**21017 SAMARATE (VA) (IT)**
• **Tanelli, Mara**
**20133 MILANO (IT)**
• **Leoni, Jessica**
**20133 MILANO (IT)**
• **Zinnari, Francesco**
**20133 MILANO (IT)**
• **Villa, Eugenia**
**20133 MILANO (IT)**

(74) Representative: **Studio Torta S.p.A. et al**
**Via Viotti, 9**
**10121 Torino (IT)**

(56) References cited:
**CN-A- 112 257 152     US-A1- 2011 288 836**

• **WANG BENKUAN ET AL: "Airborne Sensor Data-Based Unsupervised Recursive Identification for UAV Flight Phases", IEEE SENSORS JOURNAL, IEEE, USA, vol. 20, no. 18, 13 May 2020 (2020-05-13), pages 10733-10743, XP011804923, ISSN: 1530-437X, DOI: 10.1109/JSEN.2020.2994589 [retrieved on 2020-08-14]**
• **LIU DATONG ET AL: "Unsupervised Flight Phase Recognition with Flight Data Clustering based on GMM", 2020 IEEE INTERNATIONAL INSTRUMENTATION AND MEASUREMENT TECHNOLOGY CONFERENCE (I2MTC), IEEE, 25 May 2020 (2020-05-25), pages 1-6, XP033785704, DOI: 10.1109/I2MTC43012.2020.9128596 [retrieved on 2020-06-29]**

**Description**

The present invention relates to a method and system for detecting flight regimes of an aircraft, on the basis of measurements acquired during an aircraft flight.

As is known, in aeronautics the need to monitor the state of fatigue, and more generally the state of health, of the components of an aircraft, for example in order to estimate with precision the residual life time of each component, and therefore optimise maintenance activities, without compromising flight safety, is particularly felt.

In particular, it is known that the state of fatigue to which the components of an aircraft are subjected depends on the manoeuvres to which, during usage, the aircraft has been subjected, since the loads to which each component is subjected depend on the manoeuvres carried out by the aircraft. Consequently, the need is felt to correctly detect the manoeuvres performed by an aircraft, in order to then be able to determine the so-called real usage spectrum. To this end, it is known to equip aircraft with monitoring systems adapted to detect the values of quantities relative to the flight; this makes it possible to acquire a large number of measurements of these quantities, which can be analysed to reconstruct the history of the manoeuvres carried out by the aircraft.

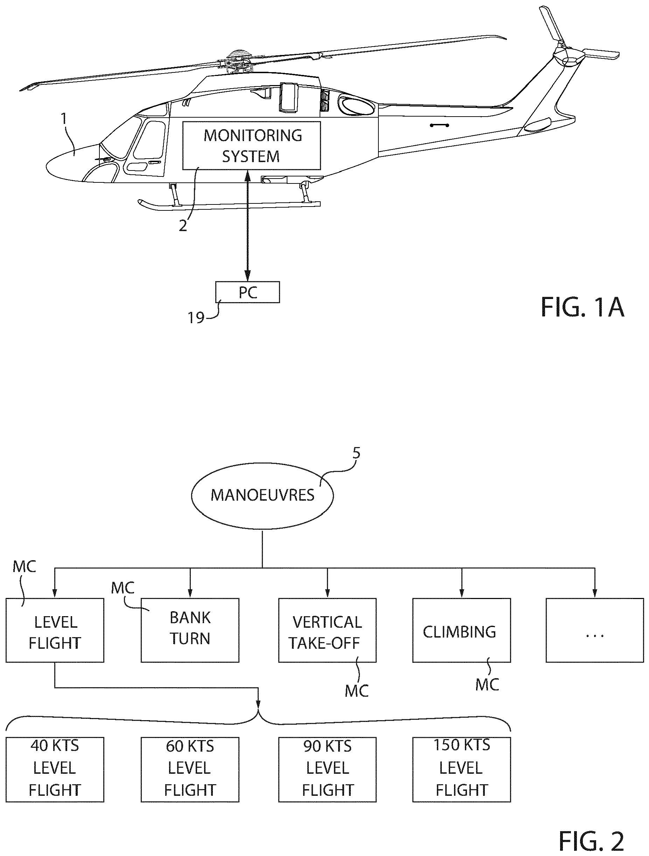

For example, Figure 1A shows a helicopter 1, which is equipped with a monitoring system 2, which includes sensors adapted to measure corresponding quantities, which are referred to in the following as primary quantities. Generally, the samples of the primary quantities are generated with a certain sampling frequency, typically in the order of about ten Hertz. Purely by way of example, the primary quantities may include: variables related to the aircraft kinematics (e.g. pitch angle, roll angle, yaw angle, vertical acceleration, vertical speed, longitudinal acceleration, lateral acceleration, roll rate, pitch rate, yaw rate, northbound speed, eastbound speed, main rotor speed); variables related to the aircraft controls (such as, for example, collective control position, lateral position cyclic control, longitudinal position cyclic control, pedal position); environmental variables (such as, for example, air speed, radar altitude, barometric altitude, wind speed, wind direction, total air temperature); variables related to the energy systems (such as, for example, the torque of the motors, the rotation speed of the engine turbines, the rotation speed of the engine generators).

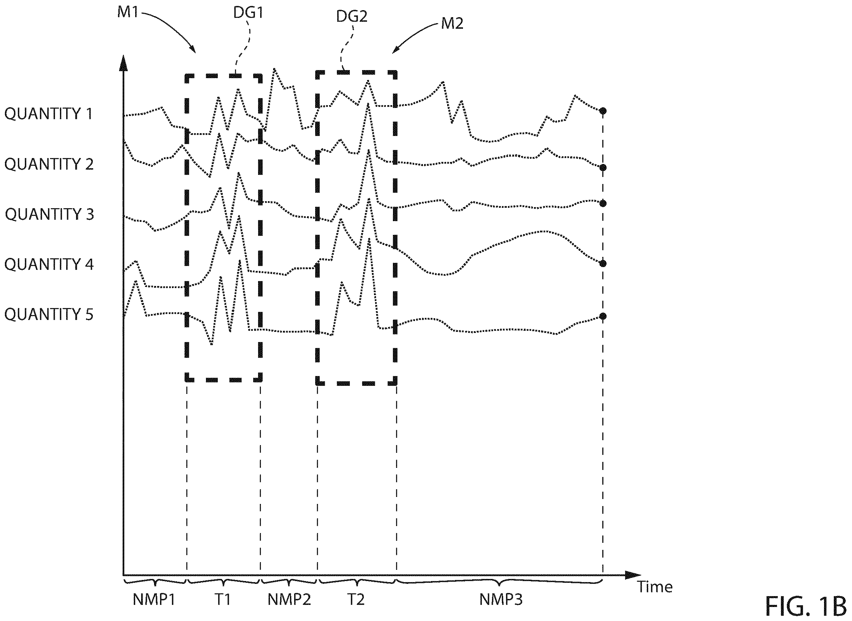

For example, Figure 1B shows the trends over time of five primary quantities (denoted respectively as quantities 1-5), which are monitored by corresponding sensors of the monitoring system 2, which periodically provide the corresponding samples.

That being said, the Applicant has observed that, even having such measurements, the correct detection of the executed manoeuvres requires an analysis by means of advanced data processing techniques and is further hampered by the fact that different manoeuvres typically have different durations, which complicates the analysis of the aforementioned temporal trends.

In order to overcome the problem of the different manoeuvre durations, European patent application No. 20425059.1, filed on 18 December 2020 on behalf of the Applicant, describes a method implemented by computer for detecting the execution, by an aircraft, of a manoeuvre belonging to a macrocategory among a plurality of predetermined macrocategories. In particular, as shown in Figure 2, the set (denoted by 5) of the manoeuvres that may be carried out by an aircraft can be subdivided into a plurality of subsets, to which in the continuation reference is indeed made as to the macrocategories (denoted by MC) . Each macrocategory MC groups together subclasses of manoeuvres with similar features. For example, Figure 2 shows macrocategories MC related to level flight, bank turn, vertical take-off, climb, etc., respectively. In turn, the macrocategory related to level flight may include a plurality of manoeuvres (only four shown in Figure 2, indicated by "forty-node level flight", "sixty-node level flight", "ninety-node level flight" and "one hundred and fifty-node level flight"). In other words, each macrocategory MC represents a corresponding class of manoeuvres, i.e. a corresponding flight regime.

That being said, the method described in the European Patent Application No. 20425059.1 envisages acquiring a data structure including a plurality of temporal series of values of quantities relative to a flight of the aircraft, and subsequently performing, for each instant of time of a succession of instants of time, the steps of: for each temporal duration among a plurality of predetermined temporal durations, selecting a corresponding subset of the data structure having a temporal extent equal to the temporal duration and centred as a function of the instant of time; from each selected subset of the data structure, extracting a corresponding feature vector; on the basis of the feature vectors, generating a corresponding input macrovector, alternatively by aggregation of the feature vectors or by performing classifications of the feature vectors, in order to generate input prediction vectors (each of which is indicative, for each macrocategory, of a corresponding probability that, in said instant of time of the succession of instants of time, the aircraft was performing a manoeuvre belonging to said macrocategory) and subsequent aggregation of the input prediction vectors. The method further envisages to perform, for each instant of time of the succession of instants of time, the steps of: applying to the input macrovector an output classifier, which is configured to generate a corresponding output vector including, for each macrocategory, a corresponding estimate of the probability that, in the aforementioned instant of time of the succession of instants of time, the aircraft was performing a manoeuvre belonging to this macrocategory; on the basis of the output vector, detecting the macrocategory to which the manoeuvre performed by the aircraft in the aforementioned instant of time of the succession of instants of time belongs.

In more detail, the method described in the aforementioned European patent application No. 20425059.1 requires a training a plurality of classifiers in a supervised manner. Such training requires having a training data structure that stores the temporal series (understood as successions of samples associated with corresponding temporal instants) formed by the values of the primary quantities detected by the helicopter monitoring systems during test flights; furthermore, it is necessary for pilots to label the test manoeuvres performed during test flights, so that the training data structure stores, for each test manoeuvre, the macrocategory to which the test manoeuvre belongs. In this way, the training data structure is formed by a plurality of portions, referred to as data groups, each of which is associated with a corresponding macrocategory; furthermore, these portions may possibly be interspersed with portions referring to unlabelled periods of time, i.e. periods of time in which the pilots did not report performing manoeuvres. For example, Figure 1B show a first and a second time interval T1, T2, wherein respectively a first and a second test manoeuvre M1, M2 of a test flight of the helicopter 1 are verified, which are reported by the pilot, belong to corresponding macrocategories (possibly, to a same macrocategory) and correspond to the data groups denoted respectively with DG1 and DG2; furthermore, in Figure 1B three periods of time are denoted by NMP1, NMP2, NMP3 respectively, which are spaced with respect to the first and second time interval T1, T2, wherein no manoeuvres are reported by the pilot; in other words, the periods of time NMP1, NMP2, NMP3 are unlabelled periods.

The training of the classifiers is thus carried out, in a supervised manner, on the basis of the training data structure and is a function of the macrocategories reported by the pilots during test flights (also known as load survey flights).

The method described in the aforementioned European Patent Application No. 204250591 therefore allows the macrocategories to which the manoeuvres performed by an aircraft belong to be detected with high precision, however it is based on the aforementioned feature extraction; consequently, the method is not very dependent on the actual waveforms of the primary quantities, which, in some situations, can lead to a reduction in the accuracy of the detection.

The document "Airborne sensor data-based unsupervised recursive identification for UAV flight phases", IEEE SENSORS JOURNAL, vol.20, no.18, September 15, 2020, of Benkuan Wang et al. discloses a Gaussian Mixture Model (GMM) clustering to identify flight phases. Furthermore, in order to reduce the identification errors caused by the fluctuations of the flight data, the flight data are preprocessed to achieve data smoothing.

The document "Unsupervised flight phase recognition with flight data clustering based on GMM", 2020 IEEE International Instrumentation and Measurement Technology Conference, 25 May 2020, pages 1-6, of Datong Liu et al. discloses a flight phase recognition method based on Gaussian Mixture Model (GMM). Furthermore, in order to solve the problem of different parameter lengths, the cubic spline interpolation is used.

CN 112 257 152A discloses a method for identifying flight phases based on aircraft data, which leverages a threshold-based approach and provides for a density-based spatial clustering of applications with noise (DBSCAN) to fix misclassifications.

US 2011/0288836 discloses detecting anomalies in an aero-engine; the anomaly detection is achieved by comparing the estimated singularities (zeros and poles) of a transfer function (in the Laplace domain) of the considered regime instance and of a reference function.

Aim of the present invention is to provide a method for detecting flight regimes, which overcomes at least in part the drawbacks of the prior art.

According to the present invention, there are provided a method and a system for detecting flight regimes, as defined in the appended Claims.

To better understand the present invention preferred embodiments thereof will be now described, for merely exemplary and non-limiting purposes, with reference to the appended drawings, wherein:

- Figure 1A schematically shows a view of an aircraft equipped with a monitoring system;
- Figure 1B shows examples of trends over time of values of quantities acquired through monitoring systems;
- Figure 2 shows a block diagram which exemplifies a possible subdivision into macrocategories of a set of manoeuvres that can be executed by an aircraft;
- Figures 3 and 11 show block diagrams relative to operations according to the present method;
- Figures 4, 6, 10 and 12 show block diagrams of data structures acquired according to the present method;
- Figure 5 shows a Cartesian graph on which a plurality of samples and an approximating function are arranged;
- Figure 7 shows examples of temporal trends of a plurality of functions;
- Figure 8 shows trends over time of signals, before and after the execution of registration operations; and
- Figure 9 shows examples of temporal trends of a plurality of functions deriving from the execution of registration operations of the functions shown in Figure 7.

Purely by way of example, the present method is now described with reference to the helicopter 1; moreover, it is assumed that the monitoring system 2 allows to monitor a number NQ of primary quantities; purely by way of example, it is assumed NQ=5, unless otherwise specified. Furthermore, it is assumed that the number of possible flight regimes to be detected is equal to NUM_REG (for example, NUM_REG = 19).

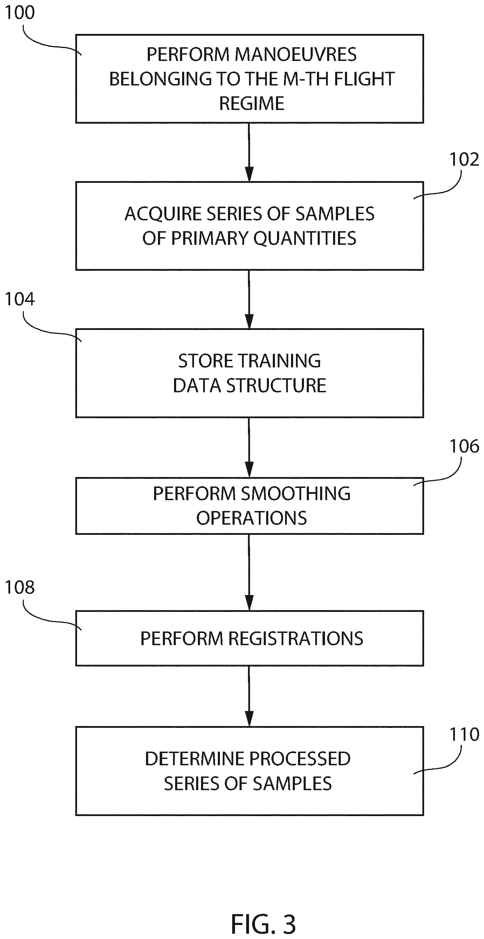

That being said, for each of the aforementioned flight regimes, the operations shown in Figure 3 are performed, which refer, by way of example, to a generic m-th flight regime.

In detail, the helicopter 1 performs (block 100) a number equal to Ninst (for example, Ninst = 39) of manoeuvres belonging to the m-th flight regime; during the execution of each of these manoeuvres, the monitoring system 2 acquires (block 102), for each primary quantity, a corresponding series of samples, which includes a number of samples Nsmax (for example, Nsmax=350). Without any loss of generality, for the sake of simplicity it is assumed that the temporal series of samples are acquired at the same sampling rate and aligned over time, i.e. in a manner that, at each sampling time, corresponding samples of all primary quantities are acquired.

For example, referring to the i-th primary quantity (with i varying between 1 and NQ) and to the j-th manoeuvre (with j varying between 1 and Ninst), the monitoring system 2 acquires a corresponding series of samples $s_{ij}[n]$, with n integer ranging between 1 and Nsmax.

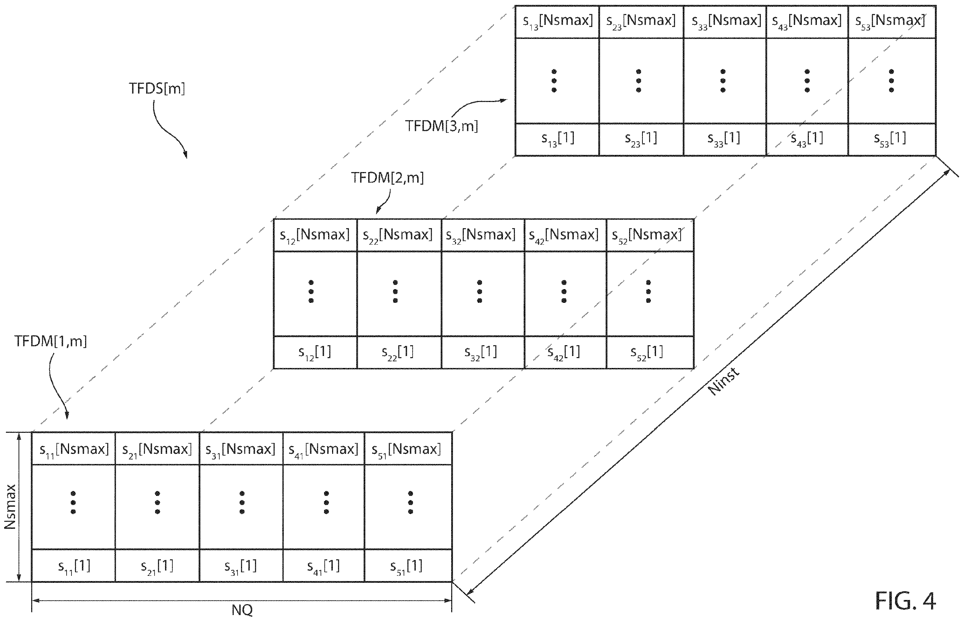

In practice, each manoeuvre belonging to the m-th flight regime represents an instance of the m-th flight regime, which is associated to a corresponding training data matrix TFDM[j,m], whose columns are formed by the series of samples $s_{1j}[n]$ - $s_{NQj}[n]$ . Consequently, the execution of the Ninst manoeuvres belonging to the m-th flight regime allows to store (block 104, Figure 3) a corresponding training data structure TFDS[m], shown qualitatively in Figure 4, wherein for simplicity's sake of visualisation Ninst=3 has been assumed (in addition to, as previously mentioned, NQ=5). In the following it is assumed, for simplicity's sake, that the training data structures TFDS[m] are stored in a computer 19 (shown in Figure 1A), which can be coupled to the monitoring system 2.

Subsequently, for each of the aforementioned flight regimes, for each series of samples $s_{ij}[n]$ of each training data matrix TFDM[j,m] of the corresponding training data structure TFDS[m], a so-called smoothing operation (block 106, Figure 3) is performed, as described below; purely by way of example, it is assumed that the smoothing operation is carried out by the computer 19.

In detail, considering each series of samples $s_{ij}[n]$ of the training data structure TFDS[m] relative to the m-th flight regime, the computer 19 determines, in a per se known manner, a corresponding approximating function $F_{ij}(t)$ of time-continuous type.

In more detail, the approximating function $F_{ij}(t)$ can be defined as a linear combination of a series of base functions (also known briefly as bases), which define a corresponding Hilbert space; the approximating function $F_{ij}(t)$ thus corresponds to a point in Hilbert space. Furthermore, the approximating function $F_{ij}(t)$ is not bound to pass through the samples of the respective series $s_{ij}[n]$ and has a smoother trend than the samples of the respective series $s_{ij}[n]$ .

Even in more detail, assuming that a number K of base functions $\varphi_k(t)$ is adopted, the smoothing operation allows to determine a corresponding set of coefficients $Ck_{k,ij}$ so that it results in:

$$F_{ij}(t) = \sum_{k=1}^{K} C_{k,ij} * \varphi_k(t)$$

Purely by way of example, the base functions $\varphi_k(t)$ may be formed by Fourier bases (i.e., sine or cosine functions) or by polynomials or splines; in such cases, a so-called basis smoother is implemented. Alternatively, the base functions $\varphi_k(t)$ may be formed by so-called kernels, i.e., by non-linear functions, in which case a so-called "kernel smoother" is implemented.

Without any loss of generality, in the present description it is assumed that, for each series of samples $s_{ij}[n]$ of the training data structure TFDS[m], the computer 19 performs a so-called "kernel nearest neighbour smoothing", i.e., kernels are adopted that perform non-linear operations on corresponding subsets of adjacent samples of each series of samples $s_{ij}[n]$. Consequently, in each point of the approximating function $F_{ij}(t)$, it occurs that the corresponding value of the approximating function $F_{ij}(t)$ depends on the samples of the series $s_{ij}[n]$ surrounding this point.

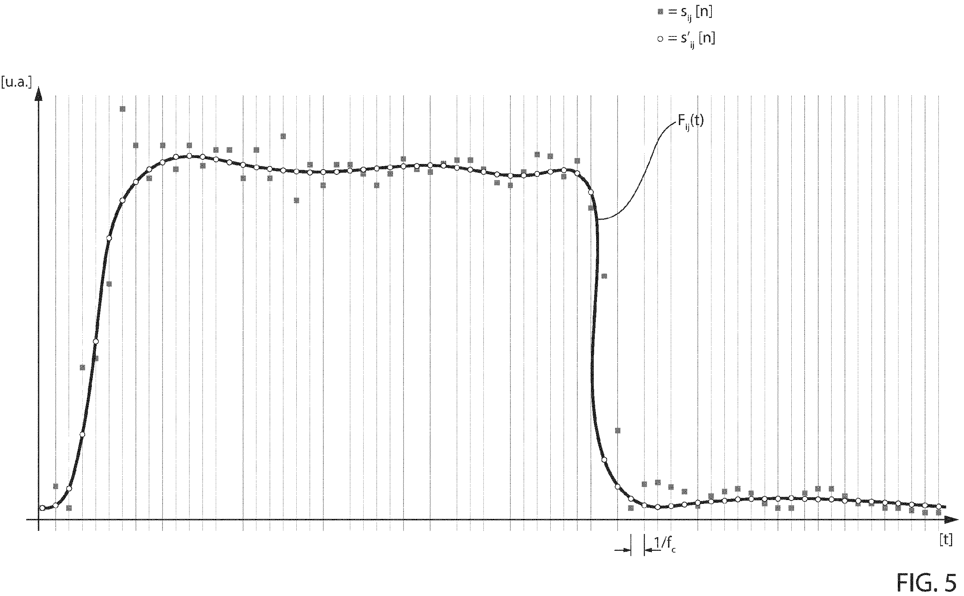

An example of the relationship present between a generic series of samples $s_{ij}[n]$ and the corresponding approximating function $F_{ij}(t)$ is shown in Figure 5, wherein the samples of the series $s_{ij}[n]$ follow one another temporally at a rate equal to the aforementioned sampling rate (denoted by $f_c$).

In practice, since the computer 19 has determined, for each series of samples $s_{ij}[n]$ of the training data structure TFDS[m] relative to the m-th flight regime, the corresponding set of coefficients $C_{k,ij}$, the computer 19 is able to determine the value assumed by the corresponding approximating function $F_{ij}(t)$ at any temporal instant. In other words, the computer 19 has performed a functional analysis, i.e. it has reconstructed, from the available samples, the mathematical function of the process underlying these samples.

Furthermore, the smoothing operation includes calculating, for each sample of the series $s_{ij}[n]$, a corresponding sample of a series $s'_{ij}[n]$, which is referred to in the following as the smoothed series $s'_{ij}[n]$.

In detail, for each sample of the series $s_{ij}[n]$, the corresponding sample of the smoothed series $s'_{ij}[n]$ is equal to the corresponding value of the corresponding approximating function $F_{ij}(t)$, as shown for example in Figure 5. In other words, referring to the case wherein n=n0, and thus referring to the sample $s_{ij}[n0]$ of the series of samples $s_{ij}[n]$, the corresponding sample $s'_{ij}[n0]$ of the smoothed series $s'_{ij}[n]$ is equal to the value of the approximating function $F_{ij}(t)$ relative to $n0*1/f_c$.

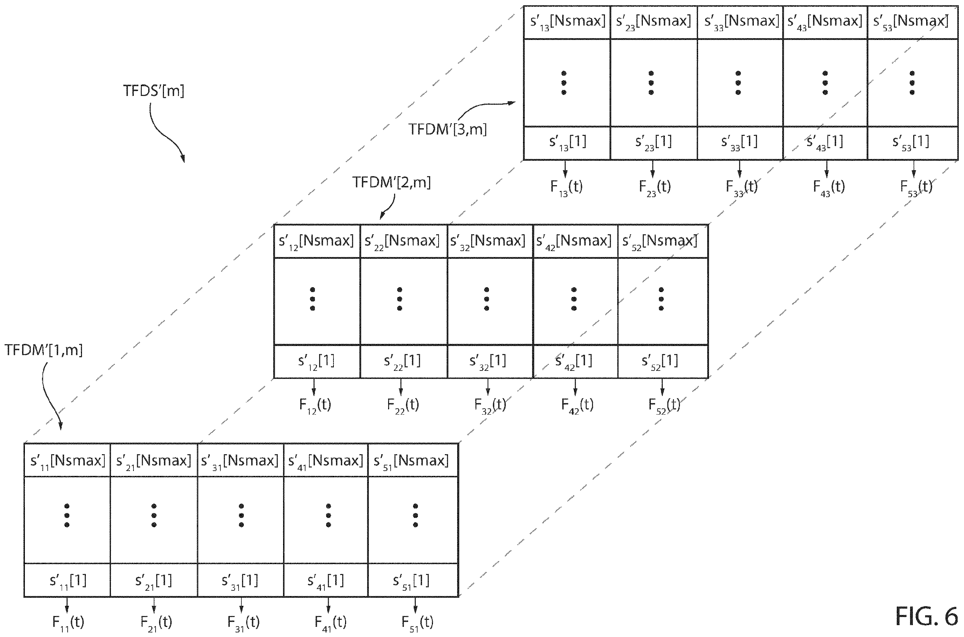

At the end of the operations referred to in block 106, the computer 19 has therefore, for each primary quantity (therefore, for each value of the index i), a corresponding plurality of smoothed series $s'_{ij}[n]$, as well as a corresponding plurality of sets of coefficients $C_{K,ij}$, which define the approximating functions $F_{ij}(t)$ relative to the aforementioned smoothed series $s'_{ij}[n]$. Consequently, the computer 19 stores, for each manoeuvre belonging to the m-th flight regime, a corresponding smoothed training data matrix TFDM' [j,m], whose columns are formed by the smoothed series $s'_{1j}[n]$ - $s'_{NQj}[n]$; moreover, relative to the m-th flight regime, the computer 19 stores a corresponding smoothed training data structure TFDS' [m], which is formed by a number equal to Ninst of smoothed training data matrices TFDM' [j,m], as shown qualitatively in Figure 6, in which the associations present between each smoothed series $s'_{ij}[n]$ and the corresponding approximating function $F_{ij}(t)$ (and therefore the corresponding set of coefficients $C_{K,ij}$) are also shown.

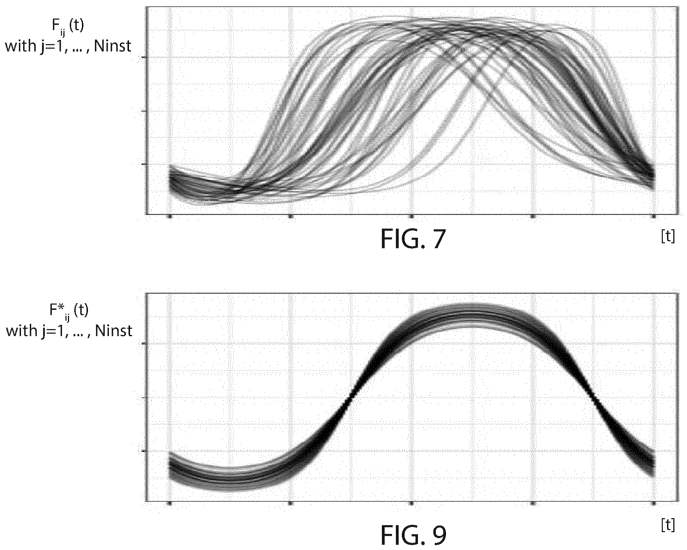

For example, Figure 7 shows examples (in number equal to Ninst) of trends of the approximating functions $F_{ij}(t)$ (with fixed i and with j=1, ..., Ninst) relating to the i-th primary quantity and to the execution of manoeuvres belonging to the m-th regime.

Then, for each primary quantity, the computer 19 performs (block 108) a so-called shift-registration operation of the approximating functions $F_{ij}(t)$ relative to the primary quantity.

In particular, considering a generic i-th primary quantity, the computer 19 processes in a per se known manner the corresponding approximating functions $F_{ij}(t)$ (with fixed i and j=1, ..., Ninst), so as to generate a corresponding set formed by a number equal to Ninst of shifted approximating functions $F^*_{ij}(t)$, which have profiles that are more aligned with each other than the profiles of the approximating functions $F_{ij}(t)$ from which they derive.

In more detail, for each primary quantity, it is verified that, starting from each approximating function $F_{ij}(t)$, a corresponding shifted approximating function $F^*_{ij}(t)$ is generated, which is in fact shifted over time with respect to the corresponding approximating function $F_{ij}(t)$, so that the shifted approximating functions $F^*_{ij}(t)$ have forms (trends over time) that are overall more superimposable between them than what happens in the case of the approximating functions $F_{ij}(t)$.

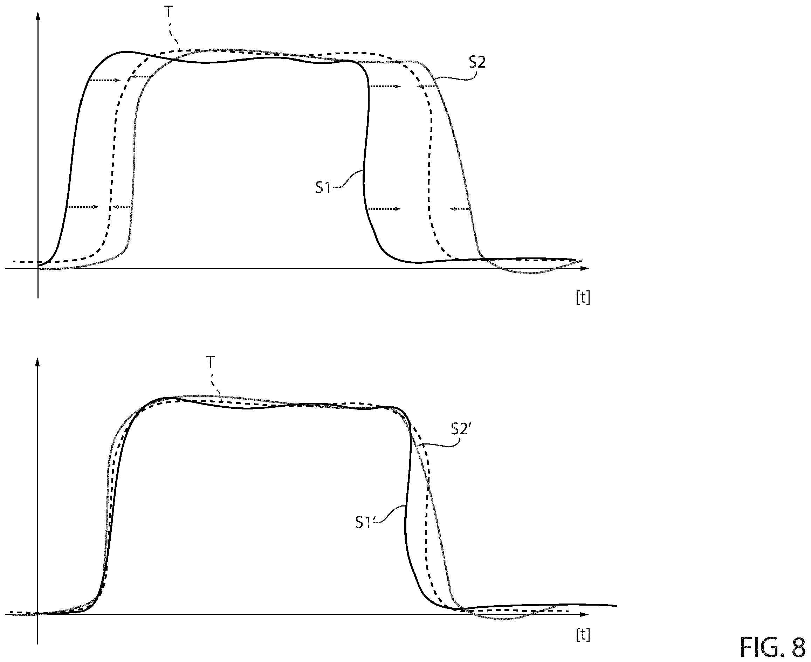

In general, and in a per se known manner, the registration may be of the so-called landmark-based type, therefore based on the possibility of having a reference curve (known as a "template") of which the temporal instants at which so-called fiducial points occur are known a priori; in this case, the registration aims at aligning the fiducial points of the functions to the fiducial points of the curve of reference. Alternatively, and still by way of example, the registration may be of the so-called continuous (or simple) type, in which case no information on the form of the functions to be registered is known a priori; consequently, points common to the approximating functions $F_{ij}(t)$ are initially sought, on the basis of which the shifts are then performed. Purely by way of example, Figure 8 shows examples of two signals, denoted by S1 and S2 respectively, which undergo a registration operation of the type based on points of reference, and in particular on the basis of a template denoted by T, with the consequent generation of corresponding shifted signals denoted by S1' and S2', which are respectively delayed with respect to the signal S1 by a time $\Delta 1$ and in advance with respect to the signal S2 by a time $\Delta 2$.

By way of example, in the present case it is assumed that the registration, in addition to being of the shift type, is of the so-called continuous type, i.e. without resorting to templates.

Figure 9 shows examples of shifted approximating functions $F^*_{ij}(t)$ that can be obtained by performing shift registration operations of the approximating functions $F_{ij}(t)$ shown in Figure 7.

The registration operations thus make it possible to thus determine, for each approximating function $F_{ij}(t)$, the phase shift (this is a time, hereafter denoted by $\Delta_{ij}$) between the approximating function $F_{ij}(t)$ and the corresponding shifted approximating function $F^*_{ij}(t)$, which are defined by the same set of coefficients $C_{K,ij}$, as well as by the same base functions, since they differ from each other only in a shift over time.

Then, the computer 19 determines (block 110, Figure 3), for each smoothed series $s'_{ij}[n]$ of the smoothed training data structure TFDS' [m] relative to the m-th flight regime, a corresponding processed series of samples $s''_{ij}[n]$, based on the corresponding phase shift $\Delta_{ij}$; in particular, the processed series of samples $s''_{ij}[n]$ is obtained by shifting over time the smoothed series $s''_{ij}[n]$ of the same phase shift $\Delta_{ij}$ present between the corresponding approximating function $F_{ij}(t)$ and the corresponding shifted approximating function $F^*_{ij}(t)$. The processed series of samples $s''_{ij}[n]$ is in any case formed by a number of samples equal to Nsmax; moreover, the shift over time may imply that some of the samples of the smoothed series $s'_{ij}[n]$ are removed (because they are shifted outside the considered temporal interval) and may imply "zero padding" operations of the processed series of samples $s''_{ij}[n]$, in order to guarantee that its number of samples is in any case equal to Nsmax.

Each processed series of samples $s''_{ij}[n]$ is associated with the same set of coefficients $C_{K,ij}$ to which the corresponding smoothed series $s'_{ij}[n]$ is associated, and thus also the corresponding series of sample $s_{ij}[n]$, these

associations being stored by the computer 19.

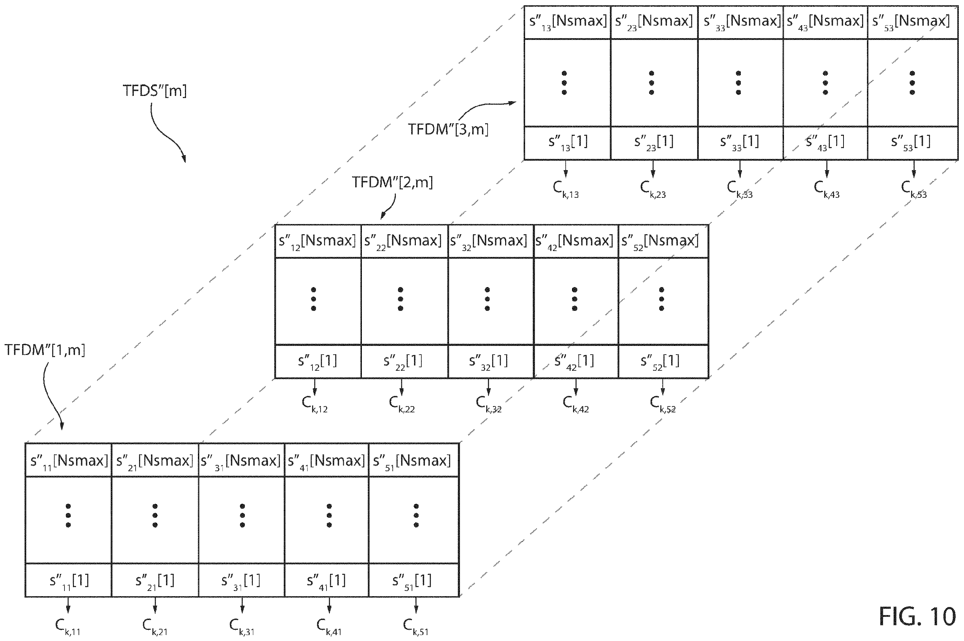

The operations referred to in blocks 106-110 allow to determine, for each series of samples $s_{ij}[n]$ of the training data structure TFDS[m] relative to the m-th flight regime, a corresponding processed series of samples $s"_{ij}[n]$. Consequently, the computer 19 stores, for each training data matrix TFDM[j,m], a corresponding processed training data matrix TFDM"[j,m], which represents a so-called "clean" version of the corresponding training data matrix TFDM[j,m] and is associated with the aforementioned m-th flight regime, this association being stored by the computer 19. Furthermore, each processed training data matrix TFDM"[j,m] is associated with a corresponding group of sets of coefficients $C_{k,ij}$, which includes the sets of coefficients $C_{k,ij}$ to which the processed series of samples $s"_{ij}[n]$ forming the processed training data matrix TFDM"[j,m] are respectively associated, these associations being stored by the computer 19 and qualitatively represented in Figure 10.

As shown qualitatively again in Figure 10, the processed training data matrices TFDM"[j,m] form a processed training data structure TFDS"[m], which is still associated with the m-th flight regime, this association being stored by the computer 19.

Since the operations shown in Figure 3 are repeated, as previously mentioned, for each of the flight regimes, the computer 19 has at its disposal a number equal to Ntot = Ninst * NUM_REG of processed training data matrices TFDM"[j,m], each of which is associated with a corresponding flight regime.

In general, the operation of registering the approximating functions $F_{ij}(t)$ and the subsequent generation of the processed series of samples $s"_{ij}[n]$ are in any case optional; in other words, the operations which are described below with reference to the processed series of samples $s"_{ij}[n]$ can be performed on the smoothed series $s'_{ij}[n]$. However, the operation of registering the approximating functions $F_{ij}(t)$ and the subsequent generation of the processed series of samples $s"_{ij}[n]$ allow to emphasise the differences between the forms of the approximating functions $F_{ij}(t)$, and thus between the smoothed series $s'_{ij}[n]$, due to real structural changes, reducing the impact, on the detection method, of the differences due to mere temporal shifts, for example attributable to different instants of start of sample acquisition. The registration therefore allows to improve the accuracy of the detection of flight regimes.

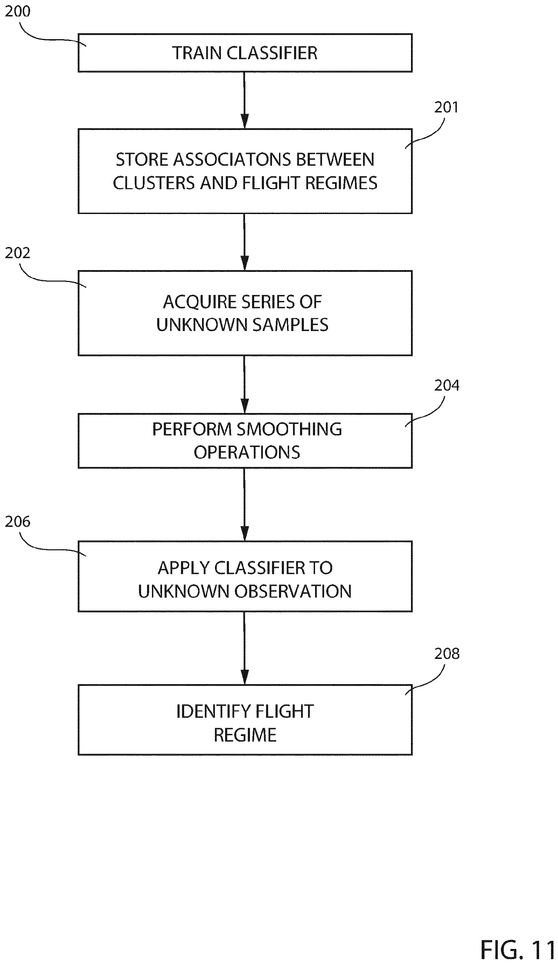

That being said, as shown qualitatively in Figure 11, the computer 19 trains (block 200) a classifier, which in the following is assumed to be of the so-called "fuzzy C-means" type; the training is performed on the basis of the processed training data matrices TFDM"[j,m], which as said are in a number equal to Ntot, as well as on the basis of the groups of sets of coefficients $C_{k,ij}$ associated with the processed training data matrices TFDM"[j,m]. In practice, each processed training data matrix TFDM"[j,m] represents, together with the corresponding group of sets of coefficients $C_{k,ij}$ (which are referred to the aforementioned base functions $\varphi_k(t)$), a so-called observation.

In more detail, the training of the classifier provides, in a per se known manner, for identifying a number of clusters equal to the number NUM_REG of flight regimes, by iteratively minimising a cost function that can be expressed as:

$$F = \sum_{o=1}^{Ntot} \sum_{c=1}^{NUM\_REG} \mu_{co}^{d} \left\| x_o - v_c \right\|_*^2 \quad \text{with} \quad \sum_{c=1}^{NUM\_REG} \mu_{co} = 1$$

wherein: $x_o$ represents the result of a so-called embedding of the o-th observation; $U_c$ represents the result of the embedding of the current estimate of the c-th centroid (with c=1, ..., NUM_REG); d represents the so-called "degree of fuzzyness"; $\mu_{co}$ represents the current membership degree of the c-th cluster of the o-th observation; the operation denoted by $\|(\cdot)\|^*$ represents any norm (e.g., the so-called norm $L^2$), which is calculated on the difference between the aforementioned embedding results.

In addition, at each iteration, either the membership degrees and the centroids (equivalently, the relative embeddings) are updated in a per se known manner, respectively by means of the equations:

$$\mu_{co} = \left[ \sum_{p=1}^{NUM\_REG} \left( \frac{\left\| x_o - v_c \right\|_*^2}{\left\| x_o - v_p \right\|_*^2} \right)^{\frac{2}{d-1}} \right]^{-1}$$

$$v_c = \left( \sum_{o=1}^{Ntot} \mu_{co}^{d} x_o \right) / \left( \sum_{o=1}^{Ntot} \mu_{co}^{d} \right)$$

In more detail, the embedding of any observation envisages calculating a quantity (e.g., a vector one) that has a dimensionality lower than the dimensionality of the corresponding processed training data matrix TFDM"[j,m] and is a function of the corresponding processed series of samples $s''_{ij}[n]$ and of the temporal trends of the corresponding approximating functions $F_{ij}(t)$. In other words, embedding is of the time-dependent type, since it depends not only on the values of the processed series of samples $s''_{ij}[n]$, but also on the forms of the corresponding approximating functions $F_{ij}(t)$.

For example, embedding an observation relative to any processed training data matrix TFDM"[j,m] may involve calculating a vector having a number of elements equal to NQ, wherein the i-th element (with i = 1, ..., NQ) is a function of the processed series of samples $s''_{ij}[n]$ (with fixed j) and of the corresponding set of coefficients $C_{k,ij}$ (with fixed j), so that this element depends on the form over time of the corresponding approximating function $F_{ij}(t)$.

That being said, the embedding of the centroids is performed in the same way as the embedding of observations. In this regard, it is known that each centroid is equal, for example, to the average of the observations weighted by the respective membership degrees, therefore each centroid can be associated with a corresponding matrix, which is equal to a weighted average of the processed training data matrices TFDM"[j,m] relative to the observations; on the basis of the matrix associated to the centroid, it is also possible to calculate a corresponding group of sets of coefficients, by performing "kernel nearest neighbour smoothing" operations, such coefficients being then also referred to the afore-mentioned base functions $\varphi_k(t)$, and thus to the aforementioned kernels.

After training the classifier, the computer 19 stores (block 201, Figure 11) the associations present between the clusters (in a number equal to NUM_REG) and the corresponding flight regimes. In detail, each cluster is associated with the flight regime that is the most represented within the cluster, in the hypothesis that each observation is assigned to the cluster with respect to which it has the highest membership degree; in other words, referring to a generic cluster and assuming that, among the observations assigned to this cluster, most of them are related to a given flight regime among the possible flight regimes (the latter being in a number equal to NUM_REG), the computer 19 stores the association between this cluster and the given flight regime. In this regard, ideally each cluster includes observations related only to the corresponding flight regime.

Subsequently, the computer 19 is able to detect unknown flight regimes, as described below.

In detail, the helicopter 1 performs an unknown flight, i.e. a flight in which the performed manoeuvres are not known. The unknown flight is formed by a succession of unknown flight segments so that, for each unknown flight segment, the monitoring system 2 acquires (block 202, Figure 11), for each primary quantity, a corresponding series of samples formed by a number of samples still equal to Nsmax. For example, referring to the i-th primary quantity (with i varying between 1 and NQ), the monitoring system 2 acquires a corresponding series of samples $sx_i[n]$, which is referred to below as the series of unknown samples $sx_i[n]$.

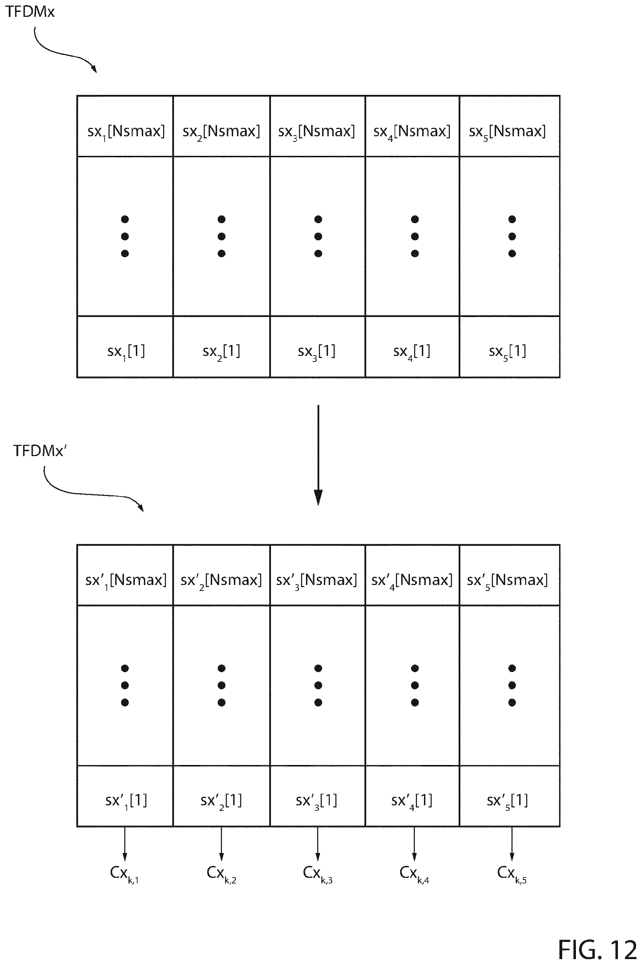

Consequently, for each unknown flight segment, the computer 19 acquires a corresponding matrix of unknown data TFDMx, whose columns are formed by the series of unknown samples $sx_1[n]$ - $sx_{NQ}[n]$, as shown qualitatively in Figure 12.

Subsequently, for each of the aforementioned unknown flight segments, the computer 19 performs (block 204, Figure 11) a smoothing operation of each of the series of unknown samples $sxi[n]$ of the corresponding matrix of unknown data TFDMx, in the same manner as described with reference to block 106.

In more detail, it is assumed that the computer 19 still performs a "kernel nearest neighbour smoothing"; moreover, for each series of unknown samples $sx_i[n]$ a corresponding unknown smoothed series $sx'_i[n]$ and a corre-sponding unknown approximating function Fxi(t), which is defined by a corresponding set of coefficients $Cx_{k,i}$, as well as by the kernels forming the base functions $\varphi_k(t)$, are determined. In the following reference is made to the set of coefficients $Cx_{k,i}$ as the set of unknown coefficients $Cx_{k,i}$.

At the end of the operations referred to in block 204, the computer 19 stores a corresponding matrix of smoothed unknown data TFDMx', whose columns are formed by the smoothed unknown series $sx'_1[n]$-$sx'_{NQ}[n]$, as shown again in Figure 12, in which the associations present between each smoothed unknown series $sx'_i[n]$ and the corresponding set of unknown coefficients $Cx_{k,i}$ are also shown. In practice, the matrix of smoothed unknown data TFDMx' and the corresponding set of unknown coefficients $Cx_{k,i}$ represent an unknown observation.

Then, for each unknown flight segment, the computer 19 applies (block 206, Figure 11) the classifier to the unknown observation, i.e., to the matrix of smoothed unknown data TFDMx' and to the corresponding group of sets of unknown coefficients with $Cx_{k,i}$, so as to obtain a corresponding probability vector formed by a number of elements equal to the number of clusters, and thus equal to the number of flight regimes NUM_REG; each element of the probability vector is associated with a corresponding cluster, and thus also with the flight regime associated with the cluster, and is equal to the probability (as estimated by the classifier) that the unknown observation belongs to the cluster, and thus refers to the flight regime associated with that cluster. The application of the classifier to the unknown observation is also a function of the aforementioned base functions $\varphi_k(t)$, and thus of the aforementioned kernels. In practice, each element of the probability vector is equal to the distance of the unknown observation from the corresponding centroid, this distance being calculated on the basis of the results of the corresponding embeddings and of the aforementioned norm $\|(\cdot)\|^*$.

Subsequently, the computer 19 identifies (block 208) the flight regime in which the helicopter 1 operated relative to the unknown flight segment to which the unknown observation refers, by selecting the flight regime associated with the cluster corresponding to the element of the probability vector having the maximum value.

The detections of the flight regimes can then be used reliably to estimate the state of fatigue and therefore the residual fatigue life of the components of an aircraft; consequently, such detections can be used, for example, to optimise the maintenance operations of a fleet of aircrafts, respecting the safety requirements.

The advantages that the present method allows to obtain emerge clearly from the previous description.

In particular, this method allows to detect with precision the flight regimes, without the need to resort to classifiers trained in a supervised manner and in a sensitive way to the temporal evolution of the primary quantities, overcoming the reduction in precision that can occur in the case of methods based on the extraction of features, as well as due to the discrepancy between the time-continuous nature of the temporal evolution of the primary quantities during the flights and the time-discrete nature of the corresponding series of samples.

In addition, thanks to the use of a fuzzy classifier, the occurrence of any mixed flight regimes (i.e. flight regimes other than those used during training) does not affect the correctness of the detection.

Clearly, changes may be made to the method and system described and shown herein without, however, departing from the scope of the present invention, as defined in the accompanying claims.

For example, smoothing may be of a different type than described. Furthermore, as previously mentioned, the operations of registration and generation of the processed sample series can be omitted.

The series of samples $s_{ij}[n]$ can be formed by different numbers of respective samples and/or by samples acquired with different sampling frequencies, in which case the series of samples can be further processed in order to standardise their lengths.

In order to generate the data for training the classifier, flights of several aircrafts (preferably of the same type), equipped with respective monitoring systems adapted to acquire samples of the same quantities, may be used in addition to several flights of the same aircraft. Similarly, the unknown flight may be performed by an aircraft other than the aircraft(s) used to train the classifier.

Finally, it is possible to use a non-fuzzy classifier, however this entails the loss of the benefits connected with this feature, and in particular a reduction in the detection capacity in the presence of intermediate flight regimes compared to those adopted in the training step. In addition, in the case of the fuzzy classifier, it may be different from a C-means classifier; for example, the classifier may be formed by a DBSCAN or hierarchical type clusteriser.

**Claims**

1. Method implemented by computer (19) for detecting flight regimes of an aircraft (1) equipped with a monitoring system (2) configured to acquire samples of a number of quantities relating to a flight of the aircraft, comprising the steps of:

   - acquiring (202) at least one matrix (TFDMx) including, for each of the quantities, a corresponding series of samples ($sx_1[n]$ - $sx_{NQ}[n]$) acquired by the monitoring system (2) during the flight of the aircraft;
   - performing (204) smoothing operations of each series of samples ($sx_1[n]$-$sx_{NQ}[n]$) of the matrix (TFDMx), sc as to generate a corresponding smoothed sample series ($sx'_1[n]$-$sx'_{NQ}[n]$) and so as to determine a corresponding time-continuous approximating function (Fxi(t)) defined by a respective set of coefficients ($Cx_{k,i}$) and by a plurality of base functions ($\varphi(t)$), the smoothed sample series forming a smoothed matrix (TFDMx');
   - on the basis of the base functions ($\varphi_k(t)$), applying (206) to the smoothed matrix (TFDMx') and to the corresponding sets of coefficients ($Cx_{k,i}$) a classifier trained to generate, for each flight regime among a plurality of flight regimes, a corresponding estimate of the probability that the smoothed matrix (TFDMx') and the corresponding sets of coefficients ($Cx_{k,i}$) belong to a cluster relative to said flight regime; and
   - identifying (208) a flight regime wherein the aircraft operated during said flight, based on the estimates generated by the classifier.

2. Method according to claim 1, wherein said classifier has been generated by performing the steps of, for each flight regime of said plurality of flight regimes:

   - for each time interval of a plurality of time intervals in which said aircraft (1) or one or more aircrafts other than said aircraft and equipped with respective monitoring systems have operated in the flight regime, acquiring (102) corresponding training matrices (TFDM[j,m]), each of which includes, for each of the quantities, a corresponding series of training samples ($s_{ij}[n]$);
   - for each training matrix (TFDM[j,m]), performing (106) smoothing operations of each series of training samples

($s_{ij}[n]$) of the training matrix (TFDM[j,m]) so as to generate a corresponding smoothed series of training samples ($s'_{ij}[n]$) and so as to determine a corresponding time-continuous approximating function ($F_{ij}(t)$) defined by a respective set of coefficients ($C_{k,ij}$) and by said plurality of base functions (($\varphi_k(t)$), the smoothed series of training samples ($s'_{ij}[n]$) forming a smoothed training matrix (TFDM' [j,m]);

- for each smoothed training matrix (TFDM'[j,m]), determining (108,110), for each smoothed series of training samples ($s'_{ij}[n]$) of the smoothed training matrix (TFDM' [j,m]), a corresponding processed series of training samples ($s''_{ij}[n]$), which is either equal to the smoothed series of training samples ($s'_{ij}[n]$) or is equal to a temporal shift of the smoothed series of training samples ($s'_{ij}[n]$), the processed series of training samples ($s''_{ij}[n]$) forming a corresponding processed training matrix (TFDM"[j,m]);

and wherein the classifier has further been generated by performing the step of:

- training (200) the classifier on the basis of observations including, each, a corresponding processed training matrix (TFDM"[j,m]) and the corresponding sets of coefficients ($C_{k,ij}$), so as to identify, for each flight regime of said plurality of flight regimes, the centroid of the corresponding cluster.

3. Method according to claim 2, wherein the classifier has further been generated by performing the step of:

for each of the quantities, performing (108) a shift registration procedure of the approximating functions ($F_{ij}(t)$) relative to the smoothed series of training samples ($s'_{ij}[n]$) relative to the quantity, so as to determine, for each of said approximating functions ($F_{ij}(t)$), a corresponding shifted approximating function ($F^*_{ij}(t)$), which is temporally shifted with respect to the corresponding approximating function ($F_{ij}(t)$) by a corresponding phase shift ($\Delta_{ij}$);

and wherein, in each processed training matrix (TFDM"[j,m]), each processed series of training samples ($s''_{ij}[n]$) is obtained by shifting the corresponding smoothed series of training samples ($s'_{ij}[n]$) by a time equal to the phase shift ($\Delta_{ij}$) present between the corresponding approximating function ($F_{ij}(t)$) and the corresponding shifted approximating function ($F^*_{ij}(t)$).

4. Method according to claim 2 or 3, wherein said step of training (200) the classifier comprises determining, for each observation, respective degrees of membership to the clusters, said method comprising associating (201) to each cluster a corresponding flight regime among said plurality of flight regimes, as a function of the flight regimes to which the observations refer and of the degrees of membership to the clusters of the observations.

5. Method according to any one of the preceding claims, wherein said smoothing operations comprise performing a kernel nearest neighbour smoothing.

6. Method according to any one of the preceding claims, wherein the classifier is of the fuzzy type.

7. Method according to claim 6, wherein the classifier is a fuzzy C-means classifier.

8. Processing system comprising means configured to carry out the method according to any one of the preceding claims.

9. Computer program comprising instructions which, when the program is executed by a computer (19), cause the execution of the method according to any one of claims 1 to 7.

10. Computer medium readable by a computer (19), on which the computer program according to claim 9 is stored.

**Patentansprüche**

1. Verfahren, das durch einen Computer (19) implementiert wird, zum Detektieren von Flugbetriebszuständen eines Luftfahrzeugs (1), das mit einem Überwachungssystem (2) ausgerüstet ist, das konfiguriert ist, Abtastwerte von einer Anzahl von Größen bezüglich des Flugs des Luftfahrzeugs zu erfassen, das die folgenden Schritte umfasst:

- Erfassen (202) mindestens einer Matrix (TFDMx), die für jede der Größen eine entsprechende Reihe von Abtastwerten ($sx_1[n]$-$sx_{NQ}[n]$) enthält, die durch das Überwachungssystem (2) während des Flugs des Luftfahrzeugs erfasst werden;

- Durchführen (204) von Glättungsvorgängen von jeder Reihe von Abtastwerten ($sx_1[n]$-$sx_{NQ}[n]$) der Matrix (TFDMx), um eine entsprechende geglättete Abtastwertreihe ($sx'_1[n]$-$sx'_{NQ}[n]$) zu erzeugen und um eine entsprechende zeitkontinuierliche Näherungsfunktion ($Fxi(t)$) zu bestimmen, die durch eine jeweilige Gruppe von Koeffizienten ($Cx_{k,i}$) und durch mehrere Basisfunktionen ($\varphi_k(t)$) definiert ist, wobei die geglätteten Abtastwertreihen eine geglättete Matrix (TFDMx') bilden;

- auf der Grundlage der Basisfunktionen ($\varphi_k(t)$), Anwenden (206) eines Klassierers auf die geglättete Matrix (TFDMx') und auf die entsprechenden Gruppen von Koeffizienten ($Cx_{k,i}$), der trainiert ist, für jeden Flugbetriebszustand von mehreren Flugbetriebszuständen eine entsprechende Schätzung der Wahrscheinlichkeit, dass die geglättete Matrix (TFDMx') und die entsprechenden Gruppen von Koeffizienten ($Cx_{k,i}$) zu einem Cluster bezüglich des Flugbetriebszustands gehören, zu erzeugen; und

- Identifizieren (208) eines Flugbetriebszustands, wobei das Luftfahrzeug während des Flugs auf der Grundlage der Schätzwerte betrieben wird, die durch den Klassierer erzeugt werden.

**2.** Verfahren nach Anspruch 1, wobei der Klassierer durch das Durchführen der folgenden Schritte für jeden Flugbetriebszustand der mehreren Flugbetriebszustände erzeugt worden ist:

- für jedes Zeitintervall von mehreren Zeitintervallen, in denen das Luftfahrzeug (1) oder ein oder mehrere andere Luftfahrzeuge, die von dem Luftfahrzeug verschieden sind und mit jeweiligen Überwachungssystemen ausgerüstet sind, in dem Flugbetriebszustand gearbeitet haben, Erfassen (102) entsprechender Trainingsmatrizen (TFDM[j, m]), die jeweils für jede der Größen eine entsprechende Reihe von Trainingsabtastwerten ($s_{ij}[n]$) enthalten;

- für jede Trainingsmatrix (TFDM[j, m]) Durchführen (106) von Glättungsvorgängen jeder Reihe von Trainingsabtastwerten ($s_{ij}[n]$) der Trainingsmatrix (TFDM[j, m]), um eine entsprechende geglättete Reihe von Trainingsabtastwerten ($s'_{ij}[n]$) zu erzeugen und um eine entsprechende zeitkontinuierliche Näherungsfunktion ($F_{ij}(t)$) zu bestimmen, die durch eine jeweilige Gruppe von Koeffizienten ($C_{k,ij}$) und durch die mehreren Basisfunktionen ($\varphi_k(t)$) definiert ist, wobei die geglätteten Reihen von Trainingsabtastwerten ($s'_{ij}[n]$) eine geglättete Trainingsmatrix (TFDM'[j, m]) bilden;

- für jede geglättete Trainingsmatrix (TFDM'[j, m]) Bestimmen (108, 110) für jede geglättete Reihe von Trainingsabtastwerten ($s'_{ij}[n]$) der geglätteten Trainingsmatrix (TFDM'[j, m]) einer entsprechenden verarbeiteten Reihe von Trainingsabtastwerten ($s''_{ij}[n]$), die entweder gleich der geglätteten Reihe von Trainingsabtastwerten ($s'_{ij}[n]$) ist oder gleich einer zeitlichen Verschiebung der geglätteten Reihe von Trainingsabtastwerten ($s'_{ij}[n]$) ist, wobei die verarbeiteten Reihen von Trainingsabtastwerten ($s''_{ij}[n]$) eine entsprechende verarbeitete Trainingsmatrix (TFDM''[j, m]) bilden;

und wobei der Klassierer ferner durch das Durchführen des folgenden Schritts erzeugt worden ist:

- Trainieren (200) des Klassierers auf der Grundlage von Beobachtungen, die jeweils eine entsprechende verarbeitete Trainingsmatrix (TFDM''[j, m]) und die entsprechenden Gruppen von Koeffizienten ($C_{k,ij}$) enthalten, um für jeden Flugbetriebszustand der mehreren Flugbetriebszustände den Schwerpunkt des entsprechenden Clusters zu identifizieren.

**3.** Verfahren nach Anspruch 2, wobei der Klassierer ferner durch das Durchführen des folgenden Schritts erzeugt worden ist:

- für jede der Größen, Durchführen (108) einer Verschiebungsregistrierungsprozedur der Näherungsfunktionen ($F_{ij}(t)$) bezüglich der geglätteten Reihe von Trainingsabtastwerten ($s'_{ij}[n]$), die zu der Größe gehört, um für jede der Näherungsfunktionen ($F_{ij}(t)$) eine entsprechende verschobene Näherungsfunktion ($F^*_{ij}(t)$) zu bestimmen, die in Bezug auf die entsprechende Näherungsfunktion ($F_{ij}(t)$) um eine entsprechende Phasenverschiebung ($\Delta_{ij}$) zeitlich verschoben ist;

und wobei in jeder verarbeiteten Trainingsmatrix (TFDM''[j, m]) jede verarbeitete Reihe von Trainingsabtastwerten ($s''_{ij}[n]$) durch Verschieben der entsprechenden geglätteten Reihe von Trainingsabtastwerten ($s'_{ij}[n]$) um eine Zeit, die gleich der Phasenverschiebung ($\Delta_{ij}$) ist, die zwischen der entsprechenden Näherungsfunktion ($F_{ij}(t)$) und der entsprechenden verschobenen Näherungsfunktion ($F^*_{ij}(t)$) vorhanden ist, erhalten wird.

**4.** Verfahren nach Anspruch 2 oder 3, wobei der Schritt des Trainierens (200) des Klassierers das Bestimmen jeweiliger Grade der Zugehörigkeit zu den Clustern für jede Beobachtung umfasst, wobei das Verfahren das Zuordnen (201) eines entsprechenden Flugbetriebszustands von den mehreren Flugbetriebszuständen als eine Funktion der Flugbetriebszustände, auf die sich die Beobachtungen beziehen, und der Grade der Zugehörigkeit zu den Clustern der Beobachtungen zu jedem Cluster umfasst.

5. Verfahren nach einem der vorhergehenden Ansprüche, wobei die Glättungsvorgänge das Durchführen einer Nächste-Nachbarn-Glättung umfassen.

6. Verfahren nach einem der vorhergehenden Ansprüche, wobei der Klassierer ein Fuzzy-Typ ist.

7. Verfahren nach Anspruch 6, wobei der Klassierer ein Fuzzy-C-Means-Klassierer ist.

8. Verarbeitungssystem, das Mittel umfasst, die konfiguriert sind, das Verfahren nach einem der vorhergehenden Ansprüche auszuführen.

9. Computerprogramm, das Anweisungen umfasst, die dann, wenn das Programm durch einen Computer (19) ausgeführt wird, die Ausführung des Verfahrens nach einem der Ansprüche 1 bis 7 bewirken.

10. Computermedium, das durch einen Computer (19) lesbar ist, auf dem das Computerprogramm nach Anspruch 9 gespeichert ist.

## Revendications

1. Procédé implémenté par ordinateur (19) pour la détection de régimes de vol d'un aéronef (1) équipé d'un système de surveillance (2) configuré pour acquérir des échantillons d'un nombre de grandeurs relatives à un vol de l'aéronef, comprenant les étapes de :

   - acquisition (202) d'au moins une matrice (TFDMx) incluant, pour chacune des grandeurs, une série correspondante d'échantillons ($sx_1[n]$ - $sx_{NQ}[n]$) acquise par le système de surveillance (2) pendant le vol de l'aéronef ;
   - réalisation (204) d'opérations de lissage de chaque série d'échantillons ($sx_1[n]$ - $sx_{NQ}[n]$) de la matrice (TFDMx), de manière à générer une série d'échantillons lissés ($sx'_1[n]$ - $sx'_{NQ}[n]$) correspondante et de manière à déterminer une fonction d'approximation continue dans le temps ($Fx_i(t)$) correspondante définie par un ensemble respectif de coefficients ($Cx_{k,i}$) et par une pluralité de fonctions de base ($\varphi_k(t)$), la série d'échantillons lissée formant une matrice lissée (TFDMx') ;
   - sur la base des fonctions de base ($\varphi_k(t)$), application (206) à la matrice lissée (TFDMx') et aux ensembles correspondants de coefficients ($Cx_{k,i}$) d'un classificateur entraîné pour générer, pour chaque régime de vol parmi une pluralité de régimes de vol, une estimée correspondante de la probabilité que la matrice lissée (TFDMx') et

   les ensembles correspondants de coefficients ($Cx_{k,i}$) appartiennent à un groupement relativement audit régime de vol ; et

   - identification (208) d'un régime de vol dans lequel l'aéronef fonctionnait pendant ledit vol, sur la base des estimées générées par le classificateur.

2. Procédé selon la revendication 1, dans lequel ledit classificateur a été généré en réalisant les étapes de, pour chaque régime de vol de ladite pluralité de régimes de vol :

   - pour chaque intervalle de temps d'une pluralité d'intervalles de temps dans lesquels ledit aéronef (1) ou un ou plusieurs aéronefs autres que ledit aéronef et équipés de systèmes de surveillance respectifs ont fonctionné dans le régime de vol, acquisition (102) de matrices d'entraînement (TFDM[j,m]) correspondantes, dont chacune inclut, pour chacune des grandeurs, une série correspondante d'échantillons d'entraînement ($s_{ij}[n]$) ;
   - pour chaque matrice d'entraînement (TFDM[j,m]), réalisation (106) d'opérations de lissage de chaque série d'échantillons d'entraînement ($S_{ij}[n]$) de la matrice d'entraînement (TFDM[j,m]) de manière à générer une série lissée correspondante d'échantillons d'entraînement ($s'_{ij}[n]$) et de manière à déterminer une fonction d'approximation continue dans le temps ($F_{ij}(t)$) correspondante définie par un ensemble respectif de coefficients ($C_{k,ij}$) et par ladite pluralité de fonctions de base ($\varphi_k(t)$), la série lissée d'échantillons d'entraînement ($s'_{ij}[n]$) formant une matrice d'entraînement lissée (TFDM'[j,m]) ;
   - pour chaque matrice d'entraînement lissée (TFDM'[j,m]), détermination (108,110), pour chaque série lissée d'échantillons d'entraînement ($s'_{ij}[n]$) de la matrice d'entraînement lissée (TFDM'[j,m]), d'une série traitée correspondante d'échantillons d'entraînement ($s''_{ij}[n]$), qui est soit égale à la série lissée d'échantillons d'entraînement ($s'_{ij}[n]$), soit égale à un décalage temporel de la série lissée d'échantillons d'entraînement ($s'_{ij}[n]$), la série traitée d'échantillons d'entraînement ($s'_{ij}[n]$) formant une matrice d'entraînement traitée (TFDM"[j,m]) correspondante ;

et dans lequel le classificateur a en outre été généré en réalisant l'étape de :

- entraînement (200) du classificateur sur la base d'observations incluant, chacune, une matrice d'entraînement traitée (TFDM"[j,m}) correspondante et les ensembles correspondants de coefficients ($C_{k,ij}$), de manière à identifier, pour chaque régime de vol de ladite pluralité de régimes de vol, le centroïde du groupement correspondant.

3. Procédé selon la revendication 2, dans lequel le classificateur a en outre été généré en réalisant l'étape de :

- pour chacune des grandeurs, réalisation (108) d'une procédure d'enregistrement à décalage des fonctions d'approximation ($F_{ij}(t)$) relativement à la série lissée d'échantillons d'entraînement ($s'_{ij}[n]$) relativement à la grandeur, de manière à déterminer, pour chacune desdites fonctions d'approximation ($F_{ij}(t)$), une fonction d'approximation décalée ($F_{ij}(t)$) correspondante, qui est décalée temporairement par rapport à la fonction d'approximation ($F_{ij}(t)$) correspondante d'un déphasage ($\Delta_{ij}$) correspondant ;

et dans lequel, dans chaque matrice d'entraînement traitée (TFDM"[j,m]), chaque série traitée d'échantillons d'entraînement ($s''_{ij}[n]$) est obtenue en décalant la série lissée correspondante d'échantillons d'entraînement ($s'_{ij}[n]$) d'un temps égal au déphasage ($\Delta_{ij}$) présent entre la fonction d'approximation ($F_{ij}(t)$) correspondante et la fonction d'approximation décalée ($F^*_{ij}(t)$) correspondante.

4. Procédé selon la revendication 2 ou 3, dans lequel ladite étape d'entraînement (200) du classificateur comprend la détermination, pour chaque observation, de degrés respectifs d'appartenance aux groupements, ledit procédé comprenant l'association (201) à chaque groupement d'un régime de vol correspondant parmi ladite pluralité de régimes de vol, en fonction des régimes de vol auxquels se réfèrent les observations et des degrés d'appartenance des observations aux groupements.

5. Procédé selon l'une quelconque des revendications précédentes, dans lequel lesdites opérations de lissage comprennent la réalisation d'un lissage des plus proches voisins de noyau.

6. Procédé selon l'une quelconque des revendications précédentes, dans lequel le classificateur est de type flou.

7. Procédé selon la revendication 6, dans lequel le classificateur est un classificateur de moyennes C flou.

8. Système de traitement comprenant des moyens configurés pour réaliser le procédé selon l'une quelconque des revendications précédentes.

9. Programme d'ordinateur comprenant des instructions qui, lorsque le programme est exécuté par un ordinateur (19), entraînent l'exécution du procédé selon l'une quelconque des revendications 1 à 7.

10. Support d'ordinateur lisible par un ordinateur (19), sur lequel est stocké le programme d'ordinateur selon la revendication 9.

FIG. 1A

FIG. 2

FIG. 1B

EP 4 163 750 B1

100

PERFORM MANOEUVRES
BELONGING TO THE M-TH FLIGHT
REGIME

102

ACQUIRE SERIES OF SAMPLES
OF PRIMARY QUANTITIES

104

STORE TRAINING
DATA STRUCTURE

106

PERFORM SMOOTHING
OPERATIONS

108

PERFORM REGISTRATIONS

110

DETERMINE PROCESSED
SERIES OF SAMPLES

FIG. 3

EP 4 163 750 B1

TFDS[m]

TFDM[3,m]

| $s_{13}[Nsmax]$ | $s_{23}[Nsmax]$ | $s_{33}[Nsmax]$ | $s_{43}[Nsmax]$ | $s_{53}[Nsmax]$ |
|---|---|---|---|---|
| ⋮ | ⋮ | ⋮ | ⋮ | ⋮ |
| $s_{13}[1]$ | $s_{23}[1]$ | $s_{33}[1]$ | $s_{43}[1]$ | $s_{53}[1]$ |

TFDM[2,m]

| $s_{12}[Nsmax]$ | $s_{22}[Nsmax]$ | $s_{32}[Nsmax]$ | $s_{42}[Nsmax]$ | $s_{52}[Nsmax]$ |
|---|---|---|---|---|
| ⋮ | ⋮ | ⋮ | ⋮ | ⋮ |
| $s_{12}[1]$ | $s_{22}[1]$ | $s_{32}[1]$ | $s_{42}[1]$ | $s_{52}[1]$ |

TFDM[1,m]

Ninst

| $s_{11}[Nsmax]$ | $s_{21}[Nsmax]$ | $s_{31}[Nsmax]$ | $s_{41}[Nsmax]$ | $s_{51}[Nsmax]$ |
|---|---|---|---|---|
| ⋮ | ⋮ | ⋮ | ⋮ | ⋮ |
| $s_{11}[1]$ | $s_{21}[1]$ | $s_{31}[1]$ | $s_{41}[1]$ | $s_{51}[1]$ |

Nsmax

NQ

FIG. 4

FIG. 5

TFDS'[m]

TFDM'[3,m]

| $s'_{13}[\text{Nsmax}]$ | $s'_{23}[\text{Nsmax}]$ | $s'_{33}[\text{Nsmax}]$ | $s'_{43}[\text{Nsmax}]$ | $s'_{53}[\text{Nsmax}]$ |
|---|---|---|---|---|
| ⋮ | ⋮ | ⋮ | ⋮ | ⋮ |
| $s'_{13}[1]$ | $s'_{23}[1]$ | $s'_{33}[1]$ | $s'_{43}[1]$ | $s'_{53}[1]$ |

$F_{13}(t)$    $F_{23}(t)$    $F_{33}(t)$    $F_{43}(t)$    $F_{53}(t)$

TFDM'[2,m]

| $s'_{12}[\text{Nsmax}]$ | $s'_{22}[\text{Nsmax}]$ | $s'_{32}[\text{Nsmax}]$ | $s'_{42}[\text{Nsmax}]$ | $s'_{52}[\text{Nsmax}]$ |
|---|---|---|---|---|
| ⋮ | ⋮ | ⋮ | ⋮ | ⋮ |
| $s'_{12}[1]$ | $s'_{22}[1]$ | $s'_{32}[1]$ | $s'_{42}[1]$ | $s'_{52}[1]$ |

$F_{12}(t)$    $F_{22}(t)$    $F_{32}(t)$    $F_{42}(t)$    $F_{52}(t)$

TFDM'[1,m]

| $s'_{11}[\text{Nsmax}]$ | $s'_{21}[\text{Nsmax}]$ | $s'_{31}[\text{Nsmax}]$ | $s'_{41}[\text{Nsmax}]$ | $s'_{51}[\text{Nsmax}]$ |
|---|---|---|---|---|
| ⋮ | ⋮ | ⋮ | ⋮ | ⋮ |
| $s'_{11}[1]$ | $s'_{21}[1]$ | $s'_{31}[1]$ | $s'_{41}[1]$ | $s'_{51}[1]$ |

$F_{11}(t)$    $F_{21}(t)$    $F_{31}(t)$    $F_{41}(t)$    $F_{51}(t)$

FIG. 6

$F_{ij}(t)$
with j=1, ... , Ninst

FIG. 7

[t]

$F^*_{ij}(t)$
with j=1, ... , Ninst

FIG. 9

[t]

FIG. 8

EP 4 163 750 B1

TFDS''[m]

TFDM''[3,m]

| s''$_{13}$[Nsmax] | s''$_{23}$[Nsmax] | s''$_{33}$[Nsmax] | s''$_{43}$[Nsmax] | s''$_{53}$[Nsmax] |
|---|---|---|---|---|
| ⋮ | ⋮ | ⋮ | ⋮ | ⋮ |
| s''$_{13}$[1] | s''$_{23}$[1] | s''$_{33}$[1] | s''$_{43}$[1] | s''$_{53}$[1] |

$C_{k,13}$  $C_{k,23}$  $C_{k,33}$  $C_{k,43}$  $C_{k,53}$

TFDM''[2,m]

| s''$_{12}$[Nsmax] | s''$_{22}$[Nsmax] | s''$_{32}$[Nsmax] | s''$_{42}$[Nsmax] | s''$_{52}$[Nsmax] |
|---|---|---|---|---|
| ⋮ | ⋮ | ⋮ | ⋮ | ⋮ |
| s''$_{12}$[1] | s''$_{22}$[1] | s''$_{32}$[1] | s''$_{42}$[1] | s''$_{52}$[1] |

$C_{k,12}$  $C_{k,22}$  $C_{k,32}$  $C_{k,42}$  $C_{k,52}$

TFDM''[1,m]

| s''$_{11}$[Nsmax] | s''$_{21}$[Nsmax] | s''$_{31}$[Nsmax] | s''$_{41}$[Nsmax] | s''$_{51}$[Nsmax] |
|---|---|---|---|---|
| ⋮ | ⋮ | ⋮ | ⋮ | ⋮ |
| s''$_{11}$[1] | s''$_{21}$[1] | s''$_{31}$[1] | s''$_{41}$[1] | s''$_{51}$[1] |

$C_{k,11}$  $C_{k,21}$  $C_{k,31}$  $C_{k,41}$  $C_{k,51}$

FIG. 10

200

TRAIN CLASSIFIER

201

STORE ASSOCIATONS BETWEEN
CLUSTERS AND FLIGHT REGIMES

202

ACQUIRE SERIES OF
UNKNOWN SAMPLES

204

PERFORM SMOOTHING
OPERATIONS

206

APPLY CLASSIFIER TO
UNKNOWN OBSERVATION

208

IDENTIFY FLIGHT
REGIME

FIG. 11

TFDMx

| $sx_1[Nsmax]$ | $sx_2[Nsmax]$ | $sx_3[Nsmax]$ | $sx_4[Nsmax]$ | $sx_5[Nsmax]$ |
|---|---|---|---|---|
| ⋮ | ⋮ | ⋮ | ⋮ | ⋮ |
| $sx_1[1]$ | $sx_2[1]$ | $sx_3[1]$ | $sx_4[1]$ | $sx_5[1]$ |

TFDMx'

| $sx'_1[Nsmax]$ | $sx'_2[Nsmax]$ | $sx'_3[Nsmax]$ | $sx'_4[Nsmax]$ | $sx'_5[Nsmax]$ |
|---|---|---|---|---|
| ⋮ | ⋮ | ⋮ | ⋮ | ⋮ |
| $sx'_1[1]$ | $sx'_2[1]$ | $sx'_3[1]$ | $sx'_4[1]$ | $sx'_5[1]$ |

$Cx_{k,1}$ $Cx_{k,2}$ $Cx_{k,3}$ $Cx_{k,4}$ $Cx_{k,5}$

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20425059
- EP 204250591 A
- CN 112257152 A
- US 20110288836 A

**Non-patent literature cited in the description**

- **BENKUAN WANG.** Airborne sensor data-based unsupervised recursive identification for UAV flight phases. *IEEE SENSORS JOURNAL,* 15 September 2020, vol. 20 (18
- **DATONG LIU.** Unsupervised flight phase recognition with flight data clustering based on GMM. *2020 IEEE International Instrumentation and Measurement Technology Conference,* 25 May 2020, 1-6